(19) Europäisches Patentamt
European Patent Office
Office européen des brevets

(11) Veröffentlichungsnummer: **0 064 793**
**B1**

(12) # EUROPÄISCHE PATENTSCHRIFT

(45) Veröffentlichungstag der Patentschrift: **06.11.85**

(51) Int. Cl.⁴: **C 04 B 28/14**, C 04 B 11/26

(21) Anmeldenummer: **82200539.3**

(22) Anmeldetag: **04.05.82**

(54) **Verfahren zur Herstellung von Gipsformsteinen.**

(30) Priorität: **06.05.81 DE 3117813**

(43) Veröffentlichungstag der Anmeldung: **17.11.82 Patentblatt 82/46**

(45) Bekanntmachung des Hinweises auf die Patenterteilung: **06.11.85 Patentblatt 85/45**

(84) Benannte Vertragsstaaten: **AT BE CH DE FR GB IT LI LU NL SE**

(56) Entgegenhaltungen:
**DE - B - 1 156 348**
**DE - C - 818 747**
**FR - A - 1 401 583**
**FR - A - 2 098 706**
**NL - A - 7 509 393**

**CHEMICAL ABSTRACTS, Band 90, Nr. 8, 19. Februar 1979, Seite 319, Nr. 60074v, Columbus, Ohio, USA**

(73) Patentinhaber: **CHEMISCHE WERKE HÜLS AG, Postfach 1320, D-4370 Marl 1 (DE)**

(72) Erfinder: **Kurandt, Hans-Friedrich, Dr., Wilhelm-Reinecke-Strasse 66, D-2120 Lüneburg (DE)**

(74) Vertreter: **Steil, Hanna, Dipl.-Chem., RSP PATENTE - PB 15 Postfach 1320, D-4370 Marl 1 (DE)**

**EP 0 064 793 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

**Beschreibung**

Bei der Produktion von Phosphorsäure nach dem Nassverfahren fällt Calciumsulfat in grossen Mengen an, und zwar, je nach Reaktionsbedingungen und Verfahren, in Form von Dihydrat, Hemihydrat oder Anhydrit. Bei den meisten Verfahren werden diese Niederschläge abgetrennt und als Abfallprodukt verworfen. Nur nach komplizierten Reinigungsverfahren liessen sich diese Fällungen bisher für Bauzwecke, wie Putzgips, aufarbeiten.

So ist die Reinigung des Phosphorsäuregipses durch das sog. hydrothermale Verfahren bekannt, bei dem dessen Reinigung durch Umwandlung in Calciumsulfathemihydrat erfolgt. Das so erhaltene Calciumsulfat kann nach der DE-B 23 17 049 zu Gipssteinen verpresst werden, wenn es mit einer Wassermenge vermischt wird, die wenigstens angenähert, höchstens jedoch gleich der stöchiometrisch zur Hydratation zum Calciumsulfatdihydrat erforderlichen Menge ist und das Verpressen bei einer Temperatur zwischen 45 und 90 °C erfolgt.

Ausserdem wird in der DE-A 28 05 523 ein Verfahren zur Herstellung von Gipsbauteilen beschrieben, bei der 30–100% gebrannter Gips (Plaster) mit einer Oberfläche nach Blaine von 500 bis 15 000 $cm^2/g$ zu feuchtem Dihydrat zugesetzt werden. Bei diesem Verfahren muss Phosphorsäuregips nach komplizierten Methoden (vgl. die genannte DE-A, Seite 8/9 (3/4)) gereinigt und der Plaster-Anteil in weiteren Arbeitsgängen (1. c. S. 11/12 (6/7)) durch Trocknen und Brennen daraus gewonnen werden und feuchtes Dihydrat und Plaster gemäss dem Verhältnis, das durch eine Formel entsprechend dem selbst zwischen 0 und 15% zu wählenden Wassergehalt zu berechnen ist, vermischt werden (1. c. S. 13 (8)), ehe die Formgebung durch Pressen erfolgen kann.

Gemäss FR-A 1 401 583 werden Baukörper aus Plaster hergestellt, also aus durch Entwässerung von gebranntem Gips entstehenden, wasserärmeren Produkten. Darunter fällt auch ein α-Hemihydrat das auf diesem Wege hergestellt wird und nicht bei der Phosphorsäureherstellung anfällt. Dieses Produkt härtet durch Gipsabbindung und Kohlendioxidaufnahme. Zudem wird dort Kalk in Mengen von mindestens 10 Gew.-% eingesetzt.

Des weiteren sind aus NL-A 75 09 393 Formkörper durch Verpressen von Massen auf Basis von Hemihydrat bekannt, wobei das Hemihydrat durch Dehydratisieren von gebranntem Phosphorsäuregips gebildet wird. Der gebrannte Gips bindet schnell und damit ungleichmässig ab und führt zu Inhomogenität in Formkörpern.

Die erfindungsgemässen Verfahren zur Herstellung von Gipsformsteinen unterscheiden sich von den obengenannten dadurch, dass zuvor weder eine Reinigung noch ein Brennen des Phosphorsäuregipses erforderlich ist. Dadurch fällt auch kein Abwasser an, und thermische Energie ist ebenfalls nicht erforderlich.

Das erfindungsgemässe Verfahren lässt sich bevorzugt für Calciumsulfathemihydrat anwenden, das in den Phosphorsäureprozessen nach DE-A 22 33 189, DE-A 23 51 031 und/oder DE-A 24 12 503 anfällt.

Bei diesen Prozessen ist bisher ein direktes Verpressen des gewinnbaren Hemihydrats zwar möglich gewesen, bei den hergestellten Formkörpern wurden jedoch bisher nicht die Härten erreicht, die beispielsweise zum Errichten tragender Wände erforderlich sind (vgl. Beispiel 2, Seite 8).

Die Verbesserung des Verfahrens zur Herstellung von Gipsformsteinen durch die vorliegende Erfindung ergibt sich dadurch, dass man das filterfeuchte Material mit Calciumhydroxid oder -oxid in einer Menge von 1–10 Gew.-%, vermischt. Sollte der Gesamtwassergehalt des filtersfeuchten Hemihydrats kleiner als 20 Gew.-% sein, so ist ihm Wasser in einer Menge zuzusetzen, dass nach dem Pressen eine vollständige Umkristallisation zu Dihydrat möglich wird.

Umgekehrt ist bei Wassergehalten über 40 Gew.-% bei den in der Kalksandsteinpresse herstellbaren Formkörpern nicht zu erreichen, dass scharfe Konturen der Presssteine bestehen bleiben, (vgl. Beispiel 3, Seite 8). In diesem Fall ist das Hemihydrat durch stärkeres Absaugen beim Filtrieren oder längeres Zentrifugieren oder sonst übliche Verfahren von dem Überschuss an Wasser zu befreien, bevor es mit den Calcium-Verbindungen und gegebenenfalls Füll- und Zusatzstoffen vermischt wird.

Nach der Kalkzugabe sollte das Pressen entweder unmittelbar oder nach einer Zeit von längstens 8 Stunden erfolgen.

Bereits nach einer Zwischenlagerzeit von 4 Stunden nach dem Pressen haben die so gewonnenen Bausteine praktisch ihre maximale Druckfestigkeit erreicht.

Überraschenderweise hat sich herausgestellt, dass das mit Kalk versetzte Material nach dem Pressen sehr schnell abbindet und eine Härte erreicht, die höher ist als die von Kalksandsteinen. Dabei liegt das spezifische Gewicht der Gips-Steine unter dem der bisher verwendeten Kalksandsteine.

Das Untermischen des Kalkes erfolgt zweckmässig durch einen handelsüblichen Paddelmischer. Das Pressen der Steine kann mit einer üblichen Kalksandsteinpresse erfolgen, wobei die Steine in einem Takt von wenigen Sekungen gepresst werden können. Die erfindungsgemässen Formsteine können in den bei Kalksandsteinen oder anderen Bauteilen üblichen Abmessungen hergestellt werden. Auch können Lochsteine produziert werden.

Das anhaftende Wasser wird als Kristallwasser gebunden, und der so ohne Energiezufuhr getrocknete Stein kann bereits wenige Stunden nach dem Pressen zu tragenden Wänden verarbeitet werden. Vor dem Pressen können dem Rohmaterial zusätzlich wasserabweisende Stoffe oder andere übliche Füll- und Wirkstoffe zugeführt werden, um die Beständigkeit gegen Feuchtigkeit (z.B. bei der Verwendung als Aussenwand) zu verbessern.

Anstelle von Calciumhydroxid oder -oxid können teilweise auch die entsprechenden Magnesiumverbindungen eingesetzt werden.

Zwar hat man auch schon früher Gips und Calciumoxid miteinander vermischt, vgl. z.B. US-A 19 67 959, 20 21 412, 20 63 488, 21 27 952, FR-A 829 204, GB-A 492 885 usw.

Das geschah jedoch, um Dihydrat zu dehydratisieren, und um so zu einem (nach erneuter Zugabe von Wasser) gut gebrauchsfähigen Mörtel zu gelangen:

$$1{,}5\ CaO + CaSO_4 \cdot 2H_2O \rightarrow 1{,}5\ Ca(OH)_2 + CaSO_4 \cdot 1/2\ H_2O$$

Allerdings hat man dabei (entsprechend der Formel) im allgemeinen mit höheren CaO-Gehalten und mit Dihydrat gearbeitet.

Betrachtet man die rechte Seite der Gleichung, dann ist die Verwendung von Mischungen von Hemihydrat und Calciumhydroxid und -oxid zu Mörtelmischungen mindestens seit 1930 bekannt.

Dass feuchte Hemihydrat mit relativ geringen Zusätzen von CaO oder $Ca(OH)_2$ ein Rohstoffgemisch zur Herstellung von tragfähigen Presssteinen sein kann, ist jedoch neu. Da es seit langem bekannt ist, dass man diese bzw. ähnliche Mischungen als Mörtel verwenden kann und dass man durch Pressen geeigneter Kalk-Quarzsand-Mischungen unter bestimmten Bedingungen Presssteine erzeugen kann, ist es überraschend, dass derartige Vorschläge bisher nicht bekannt wurden. Bauelemente aus Gips wurden bisher vorwiegend nur im Innenausbau verwendet, (vgl. Ullmann 3. Aufl. Bd. 4, Seite 213)

Bei den enormen Mengen an Gipsprodukten, die jährlich bei der Düngemittelherstellung anfallen und die bisher überwiegend auf Halde gegangen sind, ist die Möglichkeit zur Vewendung von Hemihydrat für tragfähige Presssteine in der Bauindustrie von hoher wirtschaftlicher Bedeutung. Wesentlich ist dabei ferner, dass es nach der DE-A 30 21 839, veröffentlicht im November 1981, möglich ist, zu Bausteinen zu gelangen, von denen keine radioaktiven Strahlungsschäden zu befürchten sind.

Durch Zumischen wasserabweisender Stoffe und/oder sonstiger gebräuchlicher Füll- und/oder Zusatzstoffe kann man gegebenenfalls die Eigenschaften der Hemihydrat-Presssteine noch weiter verbessern, bzw. sie besonderen Bedingungen anpassen, (vgl. auch Beispiel 6).

Das erfindungsgemässe Verfahren zur Herstellung von Gipsformsteinen, die ohne vorherige Reinigungs-, Trocknungs- und Brenn-Operationen aus feuchtem α-Calciumsulfathemihydrat aus der Phosphorsäureproduktion nur durch Verpressen in den bekannten Apparaten der Kunststein-Industrie hergestellt werden, ist also dadurch gekennzeichnet, dass man

a) das vom Filter anfallende Hemihydrat,

b) dessen Wassergehalt man – falls erforderlich –, auf Werte von 20 bis 40 Gew.-%, vorzugsweise von 21–29 Gew.-%, nachstellt,

c) mit Calciumhydroxid bzw. Calciumoxid in einer Menge von 1 bis 10 Gew.-%, vermischt und anschliessend

d) sofort, höchstens aber nach einer Zwischenlagerung von 8 Stunden,

e) mit den in der Kunststein-Industrie bekannten Apparaten in Formen presst und

f) vor der Verwendung zu Bauzwecken mindestens 4 Stunden lagert.

Das erfindungsgemässe Verfahren zur Herstellung von Gipsformsteinen wird im folgenden durch einige Beispiele erläutert, ohne dass der Schutzumfang damit nur auf diese Beispiele beschränkt bleiben soll.

Beispiel 1

Im Phosphorsäureprozess anfallendes, filterfeuchtes Calciumsulfathemihydrat mit einem Gesamtwassergehalt von 23 Gew.-% nach der Filtration wird in einem Paddelmischer mit 5 Gew.-% Calciumhydroxid vermischt. Das Material wird anschliessend in einer Kalksandsteinpresse mit einem Druck von 80 kp/cm² (7,9 N/mm²) gepresst, auf Paletten gesetzt und sich selbst überlassen. Die feucht-gepressten Steine hatten am nächsten Tag noch eine Feuchte von ca. 1 Gew.-%. Es wurden pro Stunde auf einer Maschine 5 000 Steine des Formates NF (240 × 115 × 71 mm) auf diese Weise gepresst. Die Steine wurden nach der Kalksandsteinnorm DIN 106 geprüft und dabei im Vergleich zu Kalksandstein folgende Werte gemessen:

| | | Hemihydrat-Pressstein | Kalksandstein |
|---|---|---|---|
| Masse | [mm] | 240 × 115 × 71 | 240 × 115 × 71 |
| Dichte | [kg/dm³] | 1,63 | 1,80 |
| Druckfestigkeit | [kp/cm²] | 246 | 150 |
| | [N/mm²] | 24,1 | 14,7 |

Der so gepresste Stein war bei einer geringeren Dichte in der Druckfestigkeit dem entsprechenden Kalksandstein überlegen. Er konnte wie ein normaler Kalksandstein gemauert werden, und es konnten daraus tragende Wände errichtet werden.

Beispiel 2 (nicht erfindungsgemäss, da ohne Kalkzusatz)

Es wurde wie in Beispiel 1 vorgegangen, jedoch auf den Kalkzusatz verzichtet. Die Festigkeit der so produzierten Steine war erheblich geringer. Die Druckfestigkeit betrug bei gleicher Dichte nur

55 kp/cm² (5,4 N/mm²). Der so erzeugte Stein war zum Errichten einer tragenden Wand daher nicht geeignet.

Beispiel 3 (nicht erfindungsgemäss, da zu viel Wasser im Hemihydrat)

Filterfeuchtes Calciumsulfathemihydrat mit einem Gesamtwassergehalt von 43 Gew.-% wurde in eine übliche Kalksandsteinpresse gegeben. Beim Pressen trat Wasser aus und der gewonnene Formkörper wies keine scharfen Konturen auf.

Beispiel 4 (nicht erfindungsgemäss, da zu wenig Wasser im Hemihydrat)

Filterfeuchtes Calciumsulfathemihydrat mit einem Gesamtwassergehalt von 17 Gew.-% wurde nach Zugabe von 5 Gew.-% Calciumhydroxid verpresst. Die Druckfestigkeit des so gepressten Steins betrug nach dem Abbinden 210 kp/cm² (20,6 N/mm²). Der Stein zeigte jedoch nach einer Lagerung von 8 Tagen im Feuchtraum Risse, die die Steine in den Beispielen 1, 5 und 6, nicht aufwiesen.

Beispiel 5

Filterfeuchtes Calciumsulfathemihydrat mit einem Gesamtwassergehalt von 17 Gew.-% wurden mit 8 Gew.-% $Ca(OH)_2$ vermischt und gleichzeitig 10 Gew.-% Wasser, bezogen auf den Gipsniederschlag, zugesetzt. 2 Stunden nach dem Abziehen des Niederschlages vom Phosphorsäurefilter und nach dem Zugeben von Kalk und Wasser wurde das Material mit einem Druck von 200 kp/cm² (19,6 N/mm²) zu Steinen gepresst. Die Formsteine hatten nach dem Abbinden eine Dichte von 1,68 kg/dm² und eine Druckfestigkeit von 285 kp/cm² (27,9 N/mm²).

Beispiel 6

96 Gew.T. filterfeuchtes Calciumsulfathemihydrat mit einem Gesamtwassergehalt von 23% wurde mit 3 Tl. CaO und 1 Tl. Calciumstearat gemischt und das Material bei einem Druck von 80 kp/cm² (7,8 N/mm²) gepresst. Das spez. Gewicht des Steins lag bei 1,61 kg/dm³, die Druckfestigkeit betrug 250 kp/cm² (24,5 N/mm²). Nach 7 Tagen im Feuchtraum betrug sie noch 230 kp/cm² (22,5 N/mm²).

## Patentansprüche

1. Verfahren zur Herstellung von Gipsformsteinen durch Verpressen von feuchtem α-Calciumsulfathemihydrat aus der Phosphorsäureproduktion ohne vorherige Reinigungs-, Trocknungs- und Brenn-Operationen, dadurch gekennzeichnet, dass man

a) das vom Filter anfallende Hemihydrat,

b) dessen Wassergehalt man – falls erforderlich – auf Werte von 20 bis 40 Gew.-%, vorzugsweise von 21–29 Gew.-%, nachstellt,

c) mit Calciumhydroxid bzw. Calciumoxid in einer Menge von 1 bis 10 Gew.-% vermischt und anschliessend

d) sofort, höchstens aber nach einer Zwischenlagerung von 8 Stunden,

e) mit den in der Kunststein-Industrie bekannten Apparaten in Formen presst und

f) vor der Verwendung zu Bauzwecken mindestens 4 Stunden lagert.

2. Verfahren nach Anspruch 1, dadurch gekennzeichnet, dass man den Rohmaterialien und/oder der Mischung während oder nach der Mischoperation ausserdem wasserabweisende und/oder desinfizierende und/oder sonstige gebräuchliche Füll- und/oder Wirkstoffe zumischt.

3. Gipsformsteine, hergestellt nach einem Verfahren gemäss einem der Ansprüche 1 oder 2, gekennzeichnet durch eine Dichte von < 1,8 kg/dm³ und eine nach DIN 106 ermittelte Druckfestigkeit von > 19,6 N/mm² (200kp/cm²) (für das Format NF = 240 × 115 × 71mm).

4. Verwendung der Gipsformsteine nach Anspruch 3 zu Bauzwecken, insbesondere für tragende Wände.

## Revendications

1. Procédé pour la réalisation de briques de gypse par pressage d'hemihydrate de sulfate de calcium α provenant de la production d'acide phosphorique sans opérations préalables de purification, de séchage et de calcination, procédé caractérisé en ce que:

a) on mélange à l'hémihydrate recueilli à partir du filtre,

b) dont on ajuste, si nécessaire, la teneur en eau à des valeurs se situant entre 20 à 40% en poids de préférence entre 21 et 29% en poids,

c) une quantité de 1 à 10% en poids d'hydroxyde de calcium ou bien d'oxyde de calcium,

d) et qu'ensuite on le presse dans des moules, immédiatement ou au plus tard après un stockage intermédiaire de 8 heures,

e) avec des équipements connus dans l'industrie des pierres artificielles,

f) et on le stocke au moins 4 heures avant de l'utiliser pour des constructions.

2. Procédé selon la revendication 1, caractérisé en ce qu'on ajoute en outre aux matériaux bruts et/ou au mélange, pendant ou après l'opération de mélange, des matériaux hydrophobes et/ou des matériaux désinfectants, et/ou d'autres matériaux usuels de charge et/ou des matériaux actifs.

3. Briques de gypse réalisées conformément à un procédé selon une des revendications 1 ou 2, caractérisées en ce qu'elles présentent une densité < 1,8 kg/dm³ et une résistance à la compression déterminée selon la norme DIN 106, de > que 19,6 N/mm² (200 kp/cm²) (pour le format NF=240 × 115 × 71 mm).

4. Mise en œuvre des briquettes de gypse selon la revendication 3, pour réaliser des constructions, notamment des murs porteurs.

## Claims

1. Process for the manufacture of plaster blocks by compression moulding of moist α-calcium sulphat hemihydrate from phosphoric acid production without preceding purification, drying and calcining operations, characterised in that

a) the hemihydrate obtained from the filter,

b) the water content of which is – if necessary – readjusted to values of 20–40% by weight, preferably of 21–29% by weight,

c) is mixed with calcium hydroxide or calcium oxide in an amoint of 1 to 10% by weight and thereafter

d) the mixture is pressed either immediately or after an interim storage of at most 8 hours,

e) in moulds, using the apparatuses known in the building blocks industry and

f) the blocks are stored for at least 4 hours before being used for building purposes.

2. Process according to Claim 1, characterised in that furthermore water-repellant and/or disinfectant and/or other conventional fillers and/or active ingredients are admixed to the raw materials and/or the mixture during or after the mixing operation.

3. Moulded plaster blocks produced by a process according to one of Claims 1 or 2, characterised in that they have a density of $< 1{,}8\ kg/dm^3$ and a compressive strength, determined according to DIN 106, of $> 19{,}6\ N/mm^2$ ($200\ kp/cm^2$) (in the standard size of $240 \times 115 \times 71$ mm).

4. Use of the moulded plaster blocks according to Claim 3 for building purposes, especially for load-bearing walls.